# FASCICULE DE BREVET EUROPEEN

(11) **EP 2 770 872 B1**
(45) Date de publication et mention de la délivrance du brevet: **20.11.2019**
(21) Numéro de dépôt: 12778339.7
(22) Date de dépôt: 24.10.2012
(51) Int. Cl.: A46B 9/02, A46D 3/00, B29C 45/16, B29L 31/42

(54) **PROCEDE DE FABRICATION D'UN ORGANE D'APPLICATION DE PRODUIT COSMETIQUE, ET ENSEMBLE DE FABRICATION ASSOCIE**
VERFAHREN ZUR HERSTELLUNG EINES BAUTEILS ZUM AUFTRAGEN EINES KOSMETISCHEN PRODUKTS UND ZUGEHÖRIGE ANORDNUNG ZU SEINER HERSTELLUNG
METHOD FOR PRODUCING A MEMBER FOR APPLYING COSMETIC PRODUCT, AND ASSOCIATED ASSEMBLY FOR THE PRODUCTION THEREOF

(30) Priorité: 25.10.2011 FR 1159655
(43) Date de publication de la demande: 03.09.2014
(73) Titulaire: L'Oréal, 75008 Paris (FR)
(72) Inventeur: CHARNAY, Patrick, F-01310 Polliat (FR)
(74) Mandataire: Lavoix
(86) Numéro de dépôt international: PCT/EP2012/071068
(87) Numéro de publication internationale: WO 2013/060730

(56) Documents cités:
- EP-A1- 2 030 524
- WO-A1-2006/124228
- WO-A1-2007/135557
- WO-A1-2008/091128
- FR-A1- 2 572 676

## Description

La présente invention concerne en général les procédés de fabrication d'organes d'application de produits cosmétiques, notamment les brosses.

Plus précisément, l'invention concerne selon un premier aspect un procédé de fabrication d'un organe d'application d'un produit cosmétique, l'organe d'application comprenant :
- une partie d'application ;
- une âme longitudinale, logée dans la partie d'application ;
le procédé étant du type comprenant les étapes successives suivantes :
- une première étape d'injection de la partie d'application dans une cavité d'un moule ;
- une seconde étape d'injection de l'âme longitudinale dans la cavité du moule.

Un tel procédé est connu de EP 2 030 524. Ce document décrit un procédé d'injection d'une brosse dans lequel un premier matériau destiné à constituer la partie d'application, et un second matériau destiné à constituer l'âme longitudinale, sont injectés dans la cavité du moule successivement par le même orifice. Le second matériau est injecté avant que le premier matériau ait durci.

Dans un tel procédé, il est difficile d'obtenir la répartition de matière souhaitée, c'est-à-dire d'obtenir un organe d'application dans lequel l'âme est entièrement recouverte par la partie d'application.

En effet, le premier matériau ne remplit pas entièrement la cavité du moule à la fin de la première étape, de manière à laisser de la place pour le second matériau. Le second matériau est injecté par le même point d'injection que le premier matériau, de telle sorte qu'il crée une poche à l'intérieur du premier matériau. Au fur et à mesure de l'injection du second matériau, cette poche gonfle, car le second matériau qui remplit la poche pousse le premier matériau vers la périphérie de la cavité. Le premier matériau constitue en quelque sorte un ballon ou une bulle, qui gonfle sous l'effet de l'injection du second matériau.

La vitesse d'injection et la pression d'injection du second matériau doivent être maîtrisées de manière très précise pour éviter que la bulle constituée du premier matériau se déchire, ce qui conduit à l'apparition de zones dans lesquelles le second matériau, c'est-à-dire l'âme longitudinale, n'est pas recouverte par la partie d'application.

Dans ce contexte, l'invention vise à proposer un procédé dans lequel la répartition de matière est mieux assurée.

A cette fin, l'invention porte sur un procédé de fabrication du type précité, caractérisé en ce que :
- à la première étape, une broche est disposée dans la cavité ;
- à la seconde étape, la broche est déplacée par rapport à la cavité et l'âme longitudinale est injectée dans un volume libéré par la broche, l'injection de l'âme longitudinale et le déplacement de la broche étant synchronisés pour que le volume libéré par la broche soit constamment entièrement rempli par un matériau injecté.

Ainsi, l'âme longitudinale est injectée dans un volume préalablement occupé par la broche. Le matériau constituant l'âme longitudinale n'a pas ou pratiquement pas à pousser le matériau constituant la partie d'application au moment de l'injection. La probabilité qu'il se produise une déchirure dans la partie d'application au moment de l'injection de l'âme longitudinale est donc fortement réduite.

La répartition du matériau constituant la partie d'application dans la cavité est améliorée du fait que la broche est disposée dans la cavité à la première étape, c'est-à-dire à l'étape d'injection de la partie d'application. Le matériau, du fait de la présence de la broche, vient se répartir à la périphérie de la cavité, de telle sorte qu'il n'est pas nécessaire que le matériau constituant l'âme pousse le matériau constituant la partie d'application pour finir le remplissage de la cavité.

En d'autres termes, la broche permet de créer un logement au sein de la partie d'application destiné à recevoir l'âme longitudinale. Le déplacement de la broche par rapport à la cavité permet de libérer ce logement et permet donc une injection de l'âme longitudinale dans ledit logement.

La seconde étape d'injection peut être effectuée alors que le matériau constituant la partie d'application a déjà partiellement durci. Ceci limite la probabilité qu'il se produise une déchirure dans la partie d'application lors de l'injection de l'âme longitudinale.

Par ailleurs, lors de la seconde étape d'injection, le matériau à haute température constituant l'âme longitudinale est injecté dans le volume libéré par le déplacement de la broche, et vient faire fondre la surface de la partie d'application délimitant ce volume. Les matériaux constituant la partie d'application et l'âme longitudinale peuvent ainsi se mélanger créant, après un refroidissement, une liaison présentant une forte résistance mécanique entre l'âme et la partie d'application. La résistance mécanique est encore améliorée si la seconde étape d'injection est réalisée avant que le matériau constituant la partie d'application soit excessivement durci, de manière à favoriser le mélange entre les deux matériaux au niveau de la surface du volume libéré par la broche.

Dans le procédé de l'invention, le contrôle de la pression et de la vitesse d'injection de l'âme longitudinale est beaucoup moins critique que dans l'état de la technique. Ainsi, l'âme longitudinale peut être injectée avec une vitesse d'injection plus rapide, ce qui raccourcit le temps de cycle.

Par ailleurs, avec le procédé de fabrication de l'invention, il est possible d'utiliser des moules comportant plusieurs cavités, travaillant en parallèle. Les cavités sont alimentées par un dispositif d'injection commun à toutes les cavités. En d'autres termes, les orifices d'injection des différentes cavités sont raccordés à un même collecteur d'alimentation en matériau. Le moule peut comporter plus de quatre cavités. Par exemple le moule peut comporter entre quatre et vingt-quatre cavités, et de préférence entre huit et seize cavités.

Dans l'état de la technique, il n'est pas possible d'utiliser un moule comportant par exemple quatre cavités desservies par le même collecteur d'alimentation. En effet, du fait que la maîtrise de la pression et de la vitesse d'injection est critique pour obtenir une répartition de la matière correcte, il est impératif que chaque cavité ait son propre circuit d'alimentation.

Ainsi, le procédé de fabrication de l'invention permet de raccourcir considérablement les temps de cycle pour la production d'un organe d'application.

L'organe d'application peut convenir pour tout type d'applicateur de produit cosmétique : gloss, fard à paupières, produit de soin..... L'applicateur est typiquement une brosse, par exemple une brosse à mascara.

La partie d'application comporte de préférence une partie longitudinale de support et une pluralité d'éléments d'application faisant saillie à partir de la partie de support, l'âme longitudinale étant logée dans la partie de support.

La partie de support a typiquement une forme allongée longitudinalement. Elle a par exemple une section constante dans un plan transversal à l'axe longitudinal. Elle présente par exemple une forme tubulaire, typiquement à section circulaire. En variante, la partie de support présente la forme d'un tonnelet, présentant une section plus forte dans une partie longitudinalement centrale et une section réduite à ses deux extrémités longitudinales opposées. De préférence, la partie de support présente une symétrie de révolution autour de l'axe longitudinal.

La partie de support présente de préférence une forme rectiligne. En variante, son axe central est légèrement arqué, et n'est pas rigoureusement parallèle à l'axe longitudinal.

Les éléments d'application, qu'on peut également appelés poils, s'étendent typiquement sensiblement radialement par rapport à l'axe central longitudinal de la partie de support. Ils peuvent aussi être inclinés par rapport à la direction radiale.

Ces éléments d'application sont venus de matières, plus précisément venus d'injection, avec la partie de support. Ils font saillie à partir d'une surface externe de la partie de support. Ils sont solidaires de la partie de support chacun par une extrémité de base et sont libres chacun à l'extrémité opposée.

Les éléments d'application sont typiquement régulièrement répartis longitudinalement le long de la partie de support. Ils sont également typiquement régulièrement répartis autour de l'axe central longitudinal. En variante, les éléments d'application sont répartis de manière aléatoire longitudinalement, ou circonférentiellement autour de l'axe central longitudinal. Ils peuvent aussi être disposés selon toutes sortes de motifs sur la surface externe de la partie longitudinale de support, par exemple être distribués en cercle, chaque cercle étant centré sur l'axe longitudinal central, ou être distribués selon une hélice s'enroulant autour de l'axe central, ou être rassemblés en touffe, etc ....

En variante, les éléments d'application sont disposés tous d'un côté de la partie de support, c'est-à-dire ne couvrent pas toute la périphérie de la partie de support. Ils peuvent également ne pas couvrir toute la longueur longitudinale de la partie de support.

Selon une autre variante de réalisation, la partie d'application ne comporte pas d'élément d'application. Par exemple, l'organe d'application est un rouleau dont l'âme longitudinale constitue l'axe central.

L'organe d'application est prévu pour l'application d'un produit cosmétique. On entend ici par produit cosmétique un produit conforme à la directive 93/35 CE du Conseil du 14 juin 1993.

Ce produit cosmétique peut être sous forme liquide, sous forme solide, sous la forme d'une poudre, d'un gel ou sous toute autre forme.

Ce produit peut être un mascara, un rouge à lèvres, un gloss, un produit de soin des cheveux, de la peau, un produit d'hygiène, etc...

La cavité du moule présente typiquement une forme conjuguée de la forme de l'organe d'application à injecter. Comme indiqué ci-dessus, à la première étape, la broche est disposée dans la cavité. On entend par là qu'au moins une partie de ladite broche est située à l'intérieur de la cavité pendant la première étape d'injection. A la seconde étape, la broche est déplacée par rapport à la cavité. On entend par là que la broche recule par rapport à la cavité, au sens où elle est partiellement ou totalement extraite de la cavité. En d'autres termes, la broche se déplace d'une première position, occupée à la première étape, jusqu'à une seconde position. La broche se déplace entre ces première et seconde positions selon un mouvement longitudinal typiquement en translation. Dans la première position, la broche est engagée à l'intérieur de la cavité sur une première longueur. Dans la seconde position, la broche est engagée à l'intérieur de la cavité sur une seconde longueur inférieure à la première.

On entend ici par broche une pièce de forme allongée longitudinalement, ayant typiquement la forme d'une tige de faible section au regard de sa longueur.

De préférence, la broche présente une partie ayant sensiblement la même forme que l'âme longitudinale. Cette partie est entièrement engagée dans la cavité à la première étape. En variante, la broche présente une forme légèrement différente de celle de l'âme longitudinale. Le volume libéré par la broche est alors typiquement légèrement déformé au moment de l'injection de l'âme longitudinale. Ainsi, la pression d'injection peut être relativement réduite, puisque le matériau injecté pour constituer l'âme longitudinale n'a pas à pousser le matériau constituant la partie d'application pour créer un volume libre.

De préférence, à la première étape, la partie d'application est injectée autour de la broche. La broche occupe ainsi sensiblement le centre de la cavité, le matériau constituant la partie d'application seul répartissant autour de la broche. Ceci favorise une répartition homogène de ce matériau dans la cavité.

Typiquement, la partie d'application est en un premier matériau, l'âme longitudinale étant en un second matériau différent du premier. On peut ainsi donner des propriétés différentes à la partie d'application et à l'âme longitudinale.

Ceci est particulièrement avantageux quand le second matériau est plus rigide que le premier matériau. Ainsi, l'organe d'application comporte une âme relativement rigide conférant une grande résistance mécanique à l'organe d'application. La partie d'application est en un matériau plus souple, ce qui est plus agréable pour l'utilisatrice. Le premier matériau peut également être un matériau plus doux au toucher que le second matériau. Les deux matériaux peuvent être de couleurs différentes, de textures différentes. Le premier matériau peut être légèrement translucide pour laisser apparaître le second matériau, etc ...

Typiquement, l'âme longitudinale est injectée de manière concomitante au déplacement de la broche. Ainsi, au fur et à mesure que la broche se déplace et libère progressivement un volume de la cavité, l'âme longitudinale est injectée. Ceci permet d'accélérer le temps de cycle. Selon l'invention, l'injection de l'âme longitudinale et le déplacement de la broche sont synchronisés pour que le volume libéré par la broche soit constamment rempli par un matériau injecté. Ainsi, il n'existe pas de vide à l'intérieur de la cavité, qui pourrait conduire à une déformation de la partie d'application ou à un affaissement de cette partie d'application dans un vide qui serait crée entre la broche déjà déplacée et le matériau de l'âme longitudinale en cours d'injection.

Selon une variante qui ne fait pas partie de l'invention, la broche est reculée dans un premier temps et l'âme est injectée dans un second temps une fois le recul de la broche terminé.

Typiquement, l'âme longitudinale et la partie d'application sont injectées par un même orifice d'injection du moule, débouchant dans la cavité. Ceci permet de simplifier la structure du moule. Ceci permet également de produire des organes d'application de petites tailles, pour lesquels il est difficile de ménager deux points d'injection dans la cavité.

Typiquement, l'âme fait saillie hors de la partie d'application longitudinalement d'un premier côté de la partie d'application. En d'autres termes, l'âme comporte un premier tronçon longitudinal logé à l'intérieur de la partie d'application, et un second tronçon longitudinal prolongeant le premier, destiné à constituer un manche ou à être raccordé à une autre pièce.

Dans ce cas, l'orifice d'injection commun pour la partie d'application et pour l'âme longitudinale est situé d'un second côté de la partie d'application, opposé au premier côté. Ceci permet une injection commode à la fois de la partie d'application et de l'âme longitudinale. De cette façon, l'orifice ne gêne pas le débattement de la broche.

Selon un second aspect, l'invention porte sur un ensemble de fabrication d'un organe d'application d'un produit cosmétique, prévu pour la mise en oeuvre du procédé ci-dessus. Le dispositif comprend :
- un moule ayant une cavité ;
- une broche ;
- un dispositif prévu pour déplacer la broche par rapport à la cavité ;
- un dispositif d'injection de la partie d'application dans la cavité ;
- un dispositif d'injection de l'âme longitudinale dans la cavité ;
- un calculateur programmé pour piloter l'ensemble de fabrication de manière à mettre en oeuvre les étapes successives suivantes :
- une première étape d'injection de la partie d'application dans la cavité, la broche étant disposée dans la cavité ;
- une seconde étape d'injection de l'âme longitudinale dans la cavité, au cours de laquelle la broche est déplacée par rapport à la cavité, et l'âme longitudinale est injectée dans un volume libéré par la broche, l'injection de l'âme longitudinale et le déplacement de la broche étant synchronisés pour que le volume libéré par la broche soit constamment entièrement rempli par un matériau injecté.

D'autres caractéristiques et avantages ressortiront de la description détaillée qui en est donnée ci-dessous, à titre indicatif et nullement limitatif, en référence aux figures annexées, parmi lesquelles :
- la Figure 1 est une représentation schématique simplifiée d'un ensemble de fabrication conforme à l'invention, représentée à la fin de la première étape d'injection ;
- les Figures 2 et 3 sont des vues similaires à celle de la Figure 1, représentées respectivement au cours de la seconde étape d'injection, et à la fin de la seconde étape d'injection.

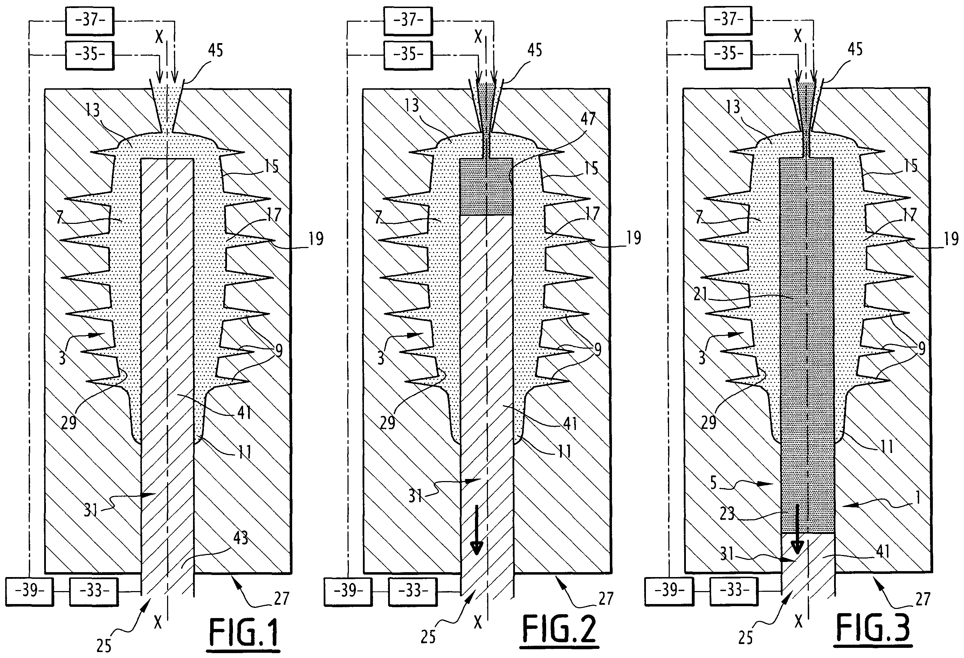

L'ensemble de fabrication 1 représenté sur les Figures 1 à 3 est destiné à la fabrication d'une brosse pour l'application d'un produit cosmétique, typiquement d'une brosse à mascara.

Comme visible notamment sur la Figure 3, la brosse 1 comporte une partie d'application 3, et une âme 5. La partie d'application 3 comporte elle-même une partie longitudinale 7 de support, et une pluralité d'éléments d'application 9 faisant saillie à partie de la partie de support 7.

La partie de support 7 présente une forme allongée suivant une direction longitudinale, et présente un axe central X longitudinal. La partie de support 7 présente une symétrie de révolution autour de l'axe X. Sa section transversale varie légèrement quand on suit l'axe longitudinal. Elle va en s'accroissant à partir d'une première extrémité longitudinale 11 jusqu'à sensiblement un point central de la partie 7, puis va en se réduisant jusqu'à une seconde extrémité longitudinale 13 opposée à la première. Les éléments d'application 9 font saillie à partir d'une surface périphérique externe 15 de la partie de support. Dans l'exemple représenté, les éléments d'application 9 présentent la forme de picots ou de poils. Ils s'étendent suivant des directions sensiblement radiales par rapport à l'axe X. Ils sont chacun solidaire par une base élargie 17 de la partie de support, et vont chacun en s'effilant jusqu'à une extrémité libre 19.

L'âme longitudinale 5 est une pièce sensiblement rectiligne, s'étendant suivant l'axe X. L'âme 5 comprend un premier tronçon 21 logé dans la partie de support 7, et un second tronçon 23 prolongeant le premier tronçon 21, et faisant saillie hors de la partie de support 7. Le tronçon 23 fait saillie hors de la partie de support 7 d'un premier côté longitudinal de celle-ci, c'est-à-dire du côté de l'extrémité 11.

Le second tronçon 23 est prévu pour être raccordé à un manche destiné à être saisi par l'utilisatrice pour utiliser la brosse. Le premier tronçon 21 s'étend sur la plus grande partie de la longueur longitudinale de la partie de support 7. Il s'étend, à partir de l'extrémité 11, pratiquement jusqu'à l'extrémité 13.

L'ensemble de fabrication 25 comprend, comme visible sur les Figures 1 à 3 :
- un moule 27 délimitant intérieurement une cavité 29 ;
- une broche longitudinale 31 ;
- un dispositif 33 prévu pour déplacer la broche 31 par rapport à la cavité 29 ;
- un dispositif 35 d'injection de la partie d'application 3 dans la cavité 29 ;
- un dispositif 37 d'injection de l'âme longitudinale 5 dans la cavité ;
- un calculateur 39 prévu pour piloter l'ensemble de fabrication.

Le moule 27 comporte typiquement deux demi-moules délimitant entre eux la cavité 29. Les demi-moules sont mobiles l'un par rapport à l'autre pour permettre l'extraction de l'organe d'application après injection.

La cavité 29 présente une forme conjuguée de celle de l'organe d'application 1.

La broche 31 est une tige s'étendant longitudinalement. Elle comporte une partie active 41 ayant sensiblement la forme de l'âme 5. La partie active 41 est prolongée par une partie de liaison 43 prévue pour coopérer avec le dispositif de déplacement 33. Le dispositif 33 est agencé pour déplacer la broche 31 par rapport à la cavité et par rapport au moule longitudinalement, entre une première position représentée sur la Figure 1 et une seconde position représentée sur la Figure 3. Dans la première position, la broche 31 est engagée dans la cavité sur une première longueur. Dans la seconde position, la broche 31 est engagée dans la cavité sur une seconde longueur inférieure à la première. Plus précisément, dans la première position toute la partie active 41 de la broche est engagée dans la cavité. Typiquement, seule cette partie active 41 est engagée dans la cavité. Dans la seconde position, la broche 31 est entièrement extraite hors de la cavité 29.

Le dispositif 33 est de tout type adapté pour permettre le déplacement de la broche. Par exemple le dispositif 33 est du type à pignon et crémaillère.

Le moule 27 comporte un orifice d'injection unique 45, prévu pour l'injection à la fois de la partie d'application 3 et de l'âme longitudinale 5. L'orifice d'injection 45 est situé du second côté de la partie d'application, c'est-à-dire du côté de l'extrémité 13.

Le dispositif 35 d'injection de la partie d'application 3 est agencé pour alimenter l'orifice 45 avec un premier matériau fondu, sous pression, destiné à constituer la partie d'application 3. Ces moyens sont connus et ne seront pas détaillés ici. Le dispositif d'injection 37 de l'âme 5 est prévu pour alimenter l'orifice 45 avec un second matériau fondu, lui aussi sous pression. Le dispositif 37 ne sera pas décrit ici.

Le premier matériau est par exemple du TPE, du TPU ou du PE. Le second matériau est typiquement un matériau ayant une température de fusion inférieure à celle du premier matériau, par exemple du PP, du PE, du PBT ou du PET. La pression d'injection du premier matériau est comprise entre 350 et 1200 bars. La vitesse d'injection du premier matériau est comprise entre 2 et 30 m/s. La vitesse d'injection du second matériau est comprise entre 2 et 30 m/s. La pression d'injection du second matériau est comprise entre 350 et 1200 bars.

Le calculateur 39 est programmé pour mettre en œuvre le procédé suivant.

Au cours d'une première étape d'injection, illustrée sur la Figure 4, le matériau constituant la partie d'application 3 est injecté dans la cavité 29 du moule. La broche 31 est alors dans sa première position. Elle s'étend sur quasiment toute la longueur longitudinale de la cavité. Son extrémité s'arrête à une courte distance de l'orifice d'injection 45, par exemple à une distance comprise entre 1 et 3 mm, de préférence à 1,5 mm. Le premier matériau est injecté par le dispositif 35. Il se répartit autour de la broche et remplit l'ensemble de la cavité, à l'exception du volume occupé par la broche.

Une fois la première étape terminée, le calculateur 39 commande la mise en œuvre d'une seconde étape, au cours de laquelle l'âme longitudinale 5 est injectée dans la cavité 29. Au cours de cette seconde étape, le calculateur commande le recul progressif de la broche 31, à partir de sa première position vers sa seconde position. Le dispositif 33 déplace donc en translation la broche vers la seconde position. De manière concomitante, le dispositif 37 alimente l'orifice d'injection 45 avec le second matériau, destiné à constituer l'âme 5. Au fur et à mesure de son recul, la broche 31 libère un volume 47 au sein de la cavité. Le second matériau, pénétrant par l'orifice d'injection 45, exerce une pression sur la zone du premier matériau séparant l'orifice d'injection 45 du volume 47.

La pression d'injection du second matériau est choisie suffisamment forte pour que ce second matériau puisse casser la zone du premier matériau séparant le point d'injection 45 du volume 47. Une fois cette zone cassée, le second matériau peut s'écouler dans le volume 47 laissé libre par le recul de la broche.

La vitesse de recul de la broche et la vitesse d'injection du second matériau sont synchronisées de manière à ce que le volume libéré par la broche soit constamment entièrement rempli par le matériau injecté. En d'autres termes, la pression d'injection et la section de passage pour le second matériau sont choisies de telle sorte que, compte tenu de la vitesse à laquelle le volume 47 est libéré par la broche, le volume de second matériau injecté soit à tout instant égal au volume libéré.

Quand la broche atteint sa seconde position, la seconde étape d'injection est terminée. Le moule est alors ouvert et l'organe d'application est extrait de la cavité, si nécessaire après refroidissement.

## Revendications

1. Procédé de fabrication d'un organe d'application d'un produit cosmétique, l'organe d'application (1) comprenant :
- une partie d'application (3) ;
- une âme longitudinale (5), logée dans la partie d'application (3) ;
le procédé comprenant les étapes successives suivantes :
- une première étape d'injection de la partie d'application (3) dans une cavité (29) d'un moule (27) ;
- une seconde étape d'injection de l'âme longitudinale (5) dans la cavité (29) du moule (27),
**caractérisé en ce que**
- à la première étape, une broche (31) est disposée dans la cavité (29),
- à la seconde étape, la broche (31) est déplacée par rapport à la cavité (29), et l'âme longitudinale (5) est injectée dans un volume (47) libéré par la broche (31), l'injection de l'âme longitudinale (5) et le déplacement de la broche (31) étant synchronisés pour que le volume (47) libéré par la broche (31) soit constamment entièrement rempli par un matériau injecté.

2. Procédé selon la revendication 1, **caractérisé en ce que** la broche (31) présente une partie (41) ayant sensiblement la même forme que l'âme longitudinale (5).

3. Procédé selon la revendication 1 ou 2, **caractérisé en ce que**, à la première étape, la partie d'application (3) est injectée autour de la broche (31).

4. Procédé selon l'une quelconque des revendications précédentes, **caractérisé en ce que** la partie d'application (3) est en un premier matériau, l'âme longitudinale (5) étant en un second matériau différent du premier.

5. Procédé selon la revendication 4, **caractérisé en ce que** le second matériau est plus rigide que le premier matériau.

6. Procédé selon l'une quelconque des revendications précédentes, **caractérisé en ce que** l'âme longitudinale (5) est injectée de manière concomitante au déplacement de la broche (31).

7. Procédé selon l'une quelconque des revendications précédentes, **caractérisé en ce que** l'âme longitudinale (5) et la partie d'application (3) sont injectés par un même orifice d'injection (45) du moule (27) débouchant dans la cavité (29).

8. Procédé selon l'une quelconque des revendications précédentes, **caractérisé en ce que** l'âme longitudinale (5) fait saillie hors de la partie d'application (3) longitudinalement d'un premier côté de la partie d'application (3).

9. Procédé selon l'une quelconque des revendications précédentes, **caractérisé en ce que** l'âme longitudinale (5) fait saillie hors de la partie d'application (3) longitudinalement d'un premier côté de la partie d'application (3), l'âme longitudinale (5) et la partie d'application (3) étant injectés par un même orifice d'injection (45) du moule (27) situé longitudinalement d'un second côté de la partie d'application (3) opposé au premier côté.

10. Procédé selon l'une quelconque des revendications précédentes, **caractérisé en ce que** la partie d'application (3) comporte une partie (7) longitudinale de support et une pluralité d'éléments d'application (9) faisant saillie à partir de la partie de support (7), l'âme longitudinale (5) étant logée dans la partie de support (7).

11. Ensemble de fabrication (25) d'un organe d'application d'un produit cosmétique prévu pour la mise en oeuvre du procédé selon l'une quelconque des revendications précédentes, le dispositif comprenant :
- un moule (27) ayant une cavité (29) ;
- une broche (31) ;
- un dispositif (33) prévu pour déplacer la broche (31) par rapport à la cavité (29) ;
- un dispositif (35) d'injection de la partie d'application (3) dans la cavité (29) ;
- un dispositif (37) d'injection de l'âme longitudinale (5) dans la cavité (29) ;
- un calculateur (39) programmé pour piloter l'ensemble de fabrication (25) de manière à mettre en oeuvre les étapes successives suivantes :
- une première étape d'injection de la partie d'application (3) dans la cavité (29), la broche (31) étant disposée dans la cavité (29) ;
- une seconde étape d'injection de l'âme longitudinale (5) dans la cavité (29) au cours de laquelle la broche (31) est déplacée par rapport à la cavité (29), et l'âme longitudinale (5) est injectée dans un volume (47) libéré par la broche (31), l'injection de l'âme longitudinale (5) et le déplacement de la broche (31) étant synchronisés pour que le volume (47) libéré par la broche (31) soit constamment entièrement rempli par un matériau injecté.

## Patentansprüche

1. Verfahren zur Herstellung eines Aufbringungselementes für ein kosmetisches Produkt, wobei das Aufbringungselement (1) umfasst:
- ein Auftragteil (3);
- einen Längskern (5), der in dem Auftragteil (3) untergebracht ist;
wobei das Verfahren die folgenden aufeinanderfolgenden Schritte umfasst:
- einen ersten Schritt des Einspritzens des Auftragteils (3) in einen Hohlraum (29) einer Form (27);
- einen zweiten Schritt des Einspritzens des Längskerns (5) in den Hohlraum (29) der Form (27);
**dadurch gekennzeichnet, dass**
- bei dem ersten Schritt ein Stift (31) in dem Hohlraum (29) angeordnet wird,
- bei dem zweiten Schritt der Stift (31) in Bezug auf den Hohlraum (29) verschoben wird und der Längskern (5) in ein von dem Stift (31) freigesetztes Volumen (47) eingespritzt wird, wobei das Einspritzen des Längskerns (5) und das Verschieben des Stiftes (31) synchronisiert ist, damit das von dem Stift (31) freigesetzte Volumen (47) kontinuierlich von dem eingespritzt Material gefüllt wird.

2. Verfahren nach Anspruch 1, **dadurch gekennzeichnet, dass** der Stift (31) einen Bereich (41) aufweist, der im Wesentlichen die gleiche Form wie der Längskern (5) hat.

3. Verfahren nach Anspruch 1 oder 2, **dadurch gekennzeichnet, dass** bei dem ersten Schritt das Auftragteil (3) um den Stift (31) herum eingespritzt wird.

4. Verfahren nach einem beliebigen der vorhergehenden Ansprüche, **dadurch gekennzeichnet, dass** das Auftragteil (3) aus einem ersten Material besteht, wobei der Längskern (5) aus einem zweiten Material unterschiedlich zum ersten besteht.

5. Verfahren nach Anspruch 4, **dadurch gekennzeichnet, dass** das zweite Material fester als das erste Material ist.

6. Verfahren nach einem beliebigen der vorhergehenden Ansprüche, **dadurch gekennzeichnet, dass** der Längskern (5) gleichzeitig mit der Verschiebung des Stiftes (31) eingespritzt wird.

7. Verfahren nach einem beliebigen der vorhergehenden Ansprüche, **dadurch gekennzeichnet, dass** der Längskern (5) und das Auftragteil (3) durch eine selbe Einspritzöffnung (45) der Form (27), die in den Hohlraum (29) mündet, eingespritzt wird.

8. Verfahren nach einem beliebigen der vorhergehenden Ansprüche, **dadurch gekennzeichnet, dass** der Längskern (5) an einer ersten Seite des Auftragteils (3) über das Auftragteil (3) in Längsrichtung herausragt.

9. Verfahren nach einem beliebigen der vorhergehenden Ansprüche, **dadurch gekennzeichnet, dass** der Längskern (5) an einer ersten Seite des Auftragteils (3) über das Auftragteil (3) herausragt, wobei der Längskern (5) und das Auftragteil (3) durch eine selbe Einspritzöffnung (45) der Form (27), die in Längsrichtung an einer zweiten Seite des Auftragteils (3) entgegengesetzt zur ersten Seite liegt, eingespritzt werden.

10. Verfahren nach einem beliebigen der vorhergehenden Ansprüche, **dadurch gekennzeichnet, dass** das Auftragteil (3) ein Längsstützteil (7) und eine Mehrzahl von Auftragelementen (9) aufweist, die von dem Stützteil (7) vorspringen, wobei der Längskern (5) in dem Stützteil (7) liegt.

11. Baugruppe (25) zur Herstellung eines Aufbringungselementes für ein kosmetisches Produkt, die für die Umsetzung des Verfahrens nach einem beliebigen der vorhergehenden Ansprüche vorgesehen ist, wobei die Vorrichtung umfasst:
- eine mit einem Hohlraum (29) versehene Form (27);
- einen Stift (31);
- eine Vorrichtung (33), die vorgesehen ist, den Stift (31) in Bezug auf den Hohlraum (29) zu verschieben;
- eine Vorrichtung (35) zum Einspritzen des Auftragsteils (3) in den Hohlraum (29);
- eine Vorrichtung (37) zum Einspritzen des Längskerns (5) in den Hohlraum (29);
- einen Rechner (39) der zum Steuern der Herstellungsbaugruppe (25) in einer Weise programmiert ist, die die folgenden aufeinanderfolgenden Schritte ausführt:
- einen ersten Schritt des Einspritzens des Auftragteils (3) in den Hohlraum (29), wobei der Stift (31) in dem Hohlraum (29) angeordnet ist;
- einen zweiten Schritt des Einspritzens des Längskerns (5) in den Hohlraum (29), während dessen der Stift (31) in Bezug auf den Hohlraum (29) verschoben wird und der Längskern (5) in ein von dem Stift (31) freigesetztes Volumen (47) eingespritzt wird, wobei das Einspritzen des Längskerns (5) und die Verschiebung des Stiftes (31) synchronisiert ist, damit das von dem Stift (31) freigesetzte Volumen (47) kontinuierlich vollständig von dem eingespritzten Material gefüllt wird.

## Claims

1. Method for producing an application member for applying a cosmetic product, the application member (1) comprising:
- an application portion (3);
- a longitudinal core (5), housed in the application portion (3);
the method comprising the following successive steps:
- a first step of injecting the application portion (3) into a cavity (29) of a mold (27);
- a second step of injecting the longitudinal core (5) into the cavity (29) of the mold (27),
**characterized in that**
- in the first step, a pin (31) is arranged inside the cavity (29),
- in the second step, the pin (31) is moved relative to the cavity (29) and the longitudinal core (5) is injected into a space (47) freed up by the pin (31),
the injection of the longitudinal core (5) and the movement of the pin (31) being synchronized so that the space (47) freed up by the pin (31) is constantly completely filled with an injected material.

2. Method according to claim 1, **characterized in that** the pin (31) has a portion (41) having substantially the same shape as the longitudinal core (5).

3. Method according to claim 1 or 2, **characterized in that**, in the first step, the application portion (3) is injected around the pin (31).

4. Method according to any of the preceding claims, **characterized in that** the application portion (3) is made of a first material, the longitudinal core (5) being made of a second material, different to the first.

5. Method according to claim 4, **characterized in that** the second material is more rigid than the first material.

6. Method according to any of the preceding claims, **characterized in that** the longitudinal core (5) is injected concomitantly with the movement of the pin (31).

7. Method according to any of the preceding claims, **characterized in that** the longitudinal core (5) and the application portion (3) are injected via a same injection orifice (45) of the mold (27) opening into the cavity (29).

8. Method according to any of the preceding claims, **characterized in that** the longitudinal core (5) protrudes from the application portion (3) longitudinally on a first side of the application portion (3).

9. Method according to any of the preceding claims, **characterized in that** the longitudinal core (5) protrudes from the application portion (3) longitudinally on a first side of the application portion (3), the longitudinal core (5) and the application portion (3) being injected via a same injection orifice (45) of the mold (27) situated longitudinally on a second side of the application portion (3) opposite the first side.

10. Method according to any of the preceding claims, **characterized in that** the application portion (3) comprises a longitudinal support portion (7) and a plurality of application elements (9) protruding from the support portion (7), the longitudinal core (5) being housed in the support portion (7).

11. Assembly (25) for producing an application member for applying a cosmetic product envisaged for the implementation of the method according to any of the above claims, the device comprising:
- a mold (27) having a cavity (29);
- a pin (31);
- a device (33) provided for moving the pin (31) relative to the cavity (29);
- a device (35) for injecting the application portion (3) into the cavity (29);
- a device (37) for injecting the longitudinal core (5) into the cavity (29);
- a computer (39) programmed to control the production assembly (25) so as to implement the following successive steps:
- a first step for injecting the application portion (3) into the cavity (29), the pin (31) being arranged in the cavity (29);
- a second step for injecting the longitudinal core (5) into the cavity (29) during which the pin (31) is moved relative to the cavity (29), and the longitudinal core (5) is injected into a space (47) freed up by the pin (31), the injection of the longitudinal core (5) and the movement of the pin (31) being synchronized so that the space (47) freed up by the pin (31) is constantly completely filled with an injected material.
